# EUROPEAN PATENT SPECIFICATION

(11) **EP 2 096 698 B1**
(45) Date of publication and mention of the grant of the patent: **23.03.2011**
(21) Application number: 09000167.8
(22) Date of filing: 08.01.2009
(51) Int. Cl.: H01M 8/02

(54) **Surface treatment method of titanium material for electrodes**
Oberflächenbehandlungsverfahren von Titanmaterial für Elektroden
Procédé de traitement de surface de matériau en titane pour électrodes

(30) Priority: 27.02.2008 JP 2008045384; 23.07.2008 JP 2008190011
(43) Date of publication of application: 02.09.2009
(73) Proprietor: Kabushiki Kaisha Kobe Seiko Sho (Kobe Steel, Ltd.), Kobe-shi, Hyogo 651-8585 (JP)
(72) Inventor: Suzuki, Jun, Kobe-shi Hyogo 651-2271 (JP); Sato, Toshiki, Kobe-shi Hyogo 651-2271 (JP); Hisamoto, Jun, Kobe-shi Hyogo 651-2271 (JP); Ito, Yoshinori, Kobe-shi Hyogo 651-2271 (JP); Tanifuji, Shinichi, Kobe-shi Hyogo 651-2271 (JP); Yashiki, Takashi, Takasago-shi Hyogo 676-8670 (JP)
(74) Representative: Müller-Boré & Partner Patentanwälte

(56) References cited:
- DD-A- 66 414
- DE-A1- 10 356 653
- DE-A1-102006 029 473

## Description

The present invention relates to a titanium material for electrodes. More particularly, it relates to a surface treatment method of a titanium material for an electrode suitable for a separator made of titanium for a fuel cell.

As distinct from the primary cell of a dry cell or the like, and the secondary cell of a lead storage battery or the like, the fuel cell capable of continuously extracting electric power by continuing supplying a fuel such as hydrogen and an oxidant such as oxygen is high in electric power generation efficiency, is not largely affected by the size of the system scale, and makes less noise and vibration. For this reason, the fuel cell is expected as an energy source covering various uses / scales. Then, the fuel cells have been developed as, specifically, a polymer electrolyte fuel cell (PEFC), an alkaline electrolyte fuel cell (AFC), a phosphoric acid fuel cell (PAFC), a molten carbonate fuel cell (MCFC), a solid oxide fuel cell (SOFC), a biological fuel cell, and the like.

A fuel cell will be described by taking a polymer electrolyte fuel cell as one example thereof. Such a polymer electrolyte fuel cell is configured as follows. A solid polymer electrolyte membrane is sandwiched between an anode electrode and a cathode electrode, resulting in a single cell. A plurality of the single cells are stacked one on another with electrodes referred to as separators (or bipolar plates) interposed therebetween.

The material for the separator for the fuel cell is required to have a characteristic of low contact resistance (denoting the occurrence of voltage drop due to the interface phenomenon between the electrodes and the separator surface), which is kept for a long period during use as a separator. In terms of the processability and the strength in addition to this respect, a study has been conventionally conducted on the application of metal materials such as aluminum alloys, stainless steels, nickel alloys, and titanium alloys.

For example, in Patent Document 1, there is a description to the effect that a separator for a fuel cell is manufactured by using a stainless steel as a base material, and plating the surface thereof with gold. Whereas, for example, in Patent Document 2, there is a description to the effect that a stainless steel or a titanium material is used as a material, and a noble metal or a noble metal alloy is deposited on the surface, or the oxide film on the base material surface is removed, followed by deposition of a noble metal or a noble metal alloy. Further, for example, in Patent Document 3, there is a description to the effect that a titanium material is used as the base material, and after removal of the oxide film on the surface, 1- to 100-nm island-like gold-plated parts are interspersed.
Patent Document 1: Japanese Patent Application Laid-Open Publication No. 10-228914
Patent Document 2: Japanese Patent Application Laid-Open Publication No. 2001-6713
Patent Document 3: Japanese Patent Application Laid-Open Publication No. 2006-97088

However, when the materials such as aluminum alloys, stainless steels, nickel alloys, and titanium alloys are each used as the base material of a separator for a fuel cell, the materials are used under extreme conditions in the inside of the fuel cell such as strong acidity, high temperature, and high pressure, and hence they tend to be remarkably deteriorated in electrical conductivity due to the oxide film formed on the base material surface, and the like. For this reason, even when the separators using the base materials are low in contact resistance upon start of use, they cannot keep the contact resistance low for a long period. Thus, the contact resistance increases with time, causing a current loss. Further, metal ions eluted from the base material due to corrosion deteriorate the polymer electrolyte membrane.

The separators described in Patent Documents 1 to 3 can reduce the contact resistance upon start of use. However, when the separators are exposed in the extreme acidic atmosphere in the fuel cell, the gold plating layer or the like on the surface may peel off, and thereby the contact resistance may increase, resulting in deterioration of the performance of the fuel cell. Further, peeling off of the gold plating layer or the like may cause corrosion, so that metal ions eluted from the base material may deteriorate the polymer electrolyte membrane.

Further, the separators described in Patent Documents 2 and 3 are configured in the following manner. In order to enhance the electrical conductivity, the oxide film on the surface of the base material made of titanium is removed. Then, in order to prevent an oxide film from being formed again, an electrically conductive layer of a noble metal, an electrically conductive resin, or the like is provided under prescribed conditions such as a vacuum atmosphere or a reduction atmosphere. As a result of this, the electrical conductivity can be enhanced by removal of the oxide film. On the other hand, hydrogen becomes more likely to enter the base material, which entails a fear of embrittlement of the base material due to entering of hydrogen on a long-term basis.

Herein, the separator for a fuel cell is required to have both the high electrical conductivity and the high corrosion resistance. Further, the separator to be used on the hydrogen electrode side is required not to absorb hydrogen and not to thereby mechanically embrittle (to have a hydrogen absorption resistance). However, a pure titanium material or a titanium alloy material tends to absorb hydrogen and embrittle as the characteristic of the material. As a common method for suppressing the hydrogen absorption, there is a method for forming a titanium oxide layer on the surface. However, the titanium oxide layer is an insulation layer. For this reason, in accordance with this method, the electrical conductivity is reduced.

In view of the foregoing problem, the present invention has been completed. It is therefore an object of the present invention to provide a surface treatment method of a titanium material for electrodes in order to implement a titanium material for electrodes excellent in electrical conductivity, corrosion resistance, and hydrogen absorption resistance.

The present inventors conducted a close study in order to solve the foregoing problem. As a result, they found out that surface treatment of a titanium material under prescribed conditions improves the electrical conductivity, the corrosion resistance, and the hydrogen absorption resistance. This has led to the completion of the present invention.

A surface treatment method of a titanium material for electrodes in accordance with a primary aspect of the present invention, which has solved the foregoing problem, is characterized by including: a titanium oxide layer formation step of forming a titanium oxide layer with a thickness of 10 nm or more and 80 nm or less on the surface of the titanium material including pure titanium or a titanium alloy; a noble metal layer formation step of forming a noble metal layer with a thickness of 2 nm or more including at least one noble metal selected from Au, Pt, and Pd on the titanium oxide layer by a PVD method; and a heat treatment step of heat treating the titanium material having the noble metal layer formed thereon at a temperature of 300 °C or more and 800 °C or less.

Thus, by forming the titanium oxide layer with a specific thickness on the surface of the titanium material in the titanium oxide layer formation step, it is possible to improve the hydrogen absorption resistance. Then, by forming the noble metal layer in the noble metal layer formation step, it is possible to improve the electrical conductivity while improving the corrosion resistance. Further, by the heat treatment in the heat treatment step, the noble metal layer is improved in adhesion, and becomes less likely to be peeled off. Further, a part of oxygen in the titanium oxide layer is diffused into the titanium material, resulting in an oxygen deficiency type titanium oxide layer. This can still further improve the electrical conductivity.

In the aspect of the present invention, it is preferable that the titanium oxide layer formation step includes: heat treating the titanium material at a temperature of 200 °C or more and 600 °C or less in an air; subjecting the titanium material to an anodic oxidation treatment at a voltage of 100 V or less; or subjecting the titanium material to an oxidation treatment in a passive state forming atmosphere of titanium. With any method of these methods, it is possible to impart a higher hydrogen absorption resistance onto the surface of the titanium material for electrodes.

In the aspect of the present invention, it is preferable that, prior to performing the titanium oxide layer formation step, a pickling treatment step of subjecting the surface of the titanium material to a pickling treatment by a solution containing a non-oxidizing acid. By doing so, it is possible to remove the contamination present on the surface of the titanium material and the natural oxide layer formed ununiformly thereon. Therefore, it is possible to form a uniform titanium oxide layer in the titanium oxide layer formation step.

With the surface treatment method of a titanium material for electrodes in accordance with the aspect of the present invention, on the surface of the titanium material including pure titanium or a titanium alloy, a titanium oxide layer is formed, and further a noble metal layer is formed, and a heat treatment is carried out. This can implement a titanium material for electrodes excellent in electrical conductivity, corrosion resistance, and hydrogen absorption resistance.

For this reason, for example, when a separator for a fuel cell is manufactured by using a titanium material for electrodes, which has been surface treated with the surface treatment method of a titanium material for electrodes of the present invention, and used for a fuel cell, the effects of being capable of keeping excellent electrical conductivity, corrosion resistance, and hydrogen absorption resistance for a long period are produced.

Embodiment (s) of the present invention will be described in detail based on the following figures, wherein:
FIG. 1 is a flowchart for illustrating the flow of a surface treatment method of a titanium material for electrode in accordance with the present invention; and
FIG. 2 is an explanatory view for illustrating the measuring method of the contact resistance.

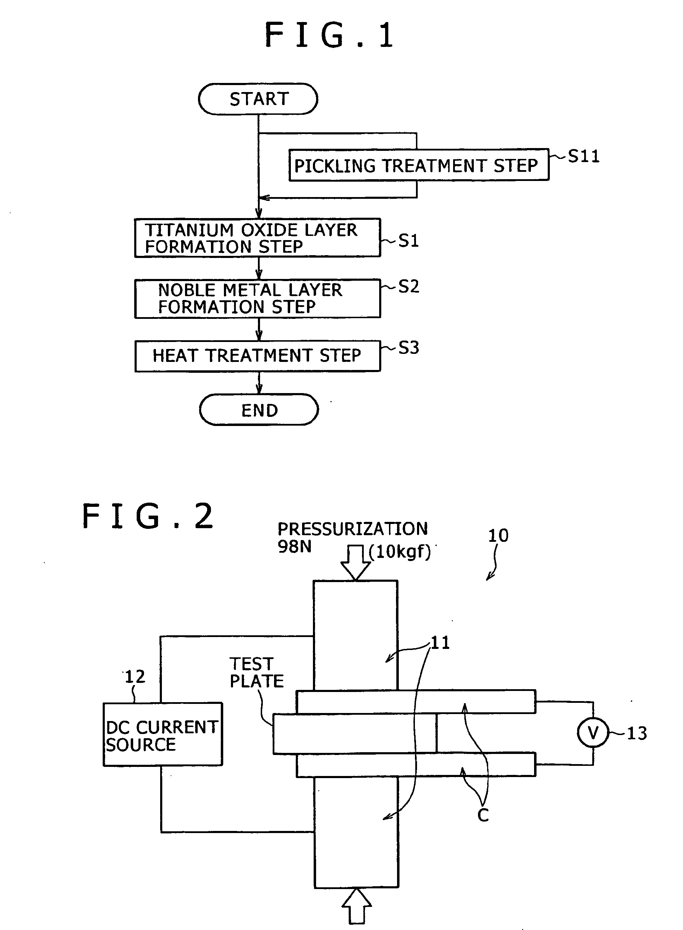

Below, by reference to FIG. 1, a surface treatment method of a titanium material for electrodes in accordance with the present invention will be described in details. FIG. 1 is a flowchart for illustrating the flow of the surface treatment method of a titanium material for electrodes in accordance with the present invention.

As shown in FIG. 1, the surface treatment method of a titanium material for electrodes in accordance with the present invention includes a titanium oxide layer formation step S1, a noble metal layer formation step S2, and a heat treatment step S3.

Below, the contents of respective steps will be described. [Titanium oxide layer formation step]

The titanium oxide layer formation step S1 is a step of forming a titanium layer with a thickness of 10 nm or more and 80 nm or less on the surface of a titanium material including pure titanium or a titanium alloy (which is hereinafter appropriately referred to as a titanium material).

Herein, examples of pure titanium and titanium alloys may include class-1 to class-4 pure titaniums specified according to JIS H 4600, and titanium alloys such as Ti-Al, Ti-Ta, Ti-6Al-4V, and Ti-Pd. Incidentally, class-1 or class-2 pure titanium specified in JIS H 4600, and α alloys are preferred from the viewpoints of the cost and the processability. However, pure titaniums or titanium alloys usable in the present invention are not limited to these. The ones having compositions equivalent to those of the pure titaniums or equivalent to those of the titanium alloys including other metal elements and the like can also be preferably used.

The sheet thickness of each such a titaniummaterial has no particular restriction. However, for example, when the titanium material is used for a separator for a fuel cell, the sheet thickness is preferably set at 0.05 to 0.3 mm. This is due to the following fact: when the sheet thickness of the titanium material falls within such a range, the material can have the strength and handling property as a sheet material while the material can be relatively easily processed into a sheet with such a thickness. Of course, it is needless to say that the sheet thickness may be set at less than 0.05 mm, or more than 0.3 mm, if required.

The formation of the titanium oxide layer on the surface of the titanium material can be accomplished by any of the following methods: (1) a heat treatment in an air atmosphere is performed; (2) an anodic oxidation treatment is carried out at a voltage of 100 V or less; and (3) an oxidization treatment is carried out in a passive state forming atmosphere of titanium. Below, respective methods will be described.

### (Heat treatment in air atmosphere)

On the surface of a titanium material including general pure titanium or titanium alloy, a natural oxide layer with a thickness of about 10 nm is formed by oxygen in air. However, the conditions are ununiform. Thus, in order to impart sufficient hydrogen absorption resistance and corrosion resistance as a titanium material for electrodes thereto, preferably, a heat treatment is carried out in an air atmosphere, thereby to form a uniform oxide layer (titanium oxide layer) with a thickness of 10 nm or more. When the thickness of the titanium oxide layer is less than 10 nm, there is a fear that sufficient hydrogen absorption resistance and corrosion resistance cannot be obtained. On the other hand, when the thickness of the titanium oxide layer exceeds 80 nm, there is a fear that sufficient electrical conductivity cannot be obtained. The thickness of such a titanium oxide layer can be controlled by the conditions (such as the temperature and the time) of the heat treatment as described later. The measurement of the thickness of the titanium oxide layer can be observed by observing the cross section by means of, for example, a transmission electron microscope (TEM).

The heat treatment temperature is set at 200°C or more and 600 °C or less. When the heat treatment is carried out at a temperature of more than 600°C in an air atmosphere, the oxidation rate becomes very high. As a result, a too thick titanium oxide layer is formed in a short time. Thus, even when the noble metal layer formation step S2 and the heat treatment step S3 described later are carried out, it becomes difficult to increase the electrical conductivity. On the other hand, when the heat treatment temperature is less than 200 °C, the titanium oxide layer is less likely to be formed. The heat treatment temperature is preferably 250 °C or more and 580°C or less, and more preferably 300 °C or more and 550°C or less. The heat treatment time is required to be appropriately controlled according to the heat treatment temperature. Whereas, although depending upon the heat treatment temperature, the heat treatment time is preferably set at 1 minute or more and five minutes or less. When the heat treatment time is less than 1 minute, there is a fear that the thickness of the titanium oxide layer cannot be set sufficiently large. On the other hand, when the heat treatment time exceeds 5 minutes, the thickness of the titanium oxide layer may become too large.

For example, the relation between the heat treatment temperature and the heat treatment time and the thickness of the titanium oxide layer is as follows. When the heat treatment is carried out at 200°C for 5 minutes, a titanium oxide layer with a thickness of about 10 nm is formed. When the heat treatment is carried out at 300°C for 5 minutes, a titanium oxide layer with a thickness of about 15 nm is formed. When the heat treatment is carried out at 400°C for 5 minutes, a titanium oxide layer with a thickness of about 20 nm is formed. When the heat treatment is carried out at 500 °C for 3 minutes, a titanium oxide layer with a thickness of about 35 nm is formed. When the heat treatment is carried out at 600°C for 3 minutes, a titanium oxide layer with a thickness of about 60 nm is formed. Further, when the heat treatment is carried out at a temperature of 650°C exceeding the range of the heat treatment temperature in the present invention for 3 minutes, a titanium oxide layer with a thickness of about 85 nm is formed. When the heat treatment is carried out at 700 °C for 2 minutes, a titanium oxide layer with a thickness of about 90 nm is formed. Thus, the short heat treatment time results in an increase in thickness of the titanium oxide layer.

### (Anodic oxidation treatment)

By subjecting a titanium material including pure titanium or a titanium alloy to an anodic oxidation treatment, it is also possible to form a titanium oxide layer on the surface. It has been known that the thickness of the titanium oxide layer formed by the anodic oxidation treatment roughly depends upon the voltage during the treatment. When the voltage is 100 V or less, the thickness of the titanium oxide layer can be controlled at 80 nm or less. Therefore, the voltage during the anodic oxidation treatment is set at 100 V or less.

As the electrolytes for use in the anodic oxidation treatment, aqueous solutions of sulfuric acid, phosphoric acid, acetic acid, boric acid, and the like are used alone, or in a mixed solution thereof. The thickness of the titanium oxide layer to be formed varies according to the combination of the type and concentration of the electrolyte, the treatment temperature, the voltage, and the treatment time. Therefore, the combination is appropriately controlled so that the thickness becomes 10 nm or more and 80 nm or less. For example, in the case where the anodic oxidation treatment is carried out at room temperature (20 to 25 °C) using 1 mass% phosphoric acid aqueous solution as the electrolyte, when the treatment is carried out at 20 V for 20 minutes, a titanium oxide layer with a thickness of about 15 nm is formed; when the treatment is carried out at 50 V for 20 minutes, a titanium oxide layer with a thickness of about 40 nm is formed; and when the treatment is carried out at 100 V for 20 minutes, a titanium oxide layer with a thickness of about 80 nm is formed

### (Oxidation treatment in passive state forming atmosphere)

By subjecting a titanium material including pure titanium or a titanium alloy to an oxidation treatment in a passive state forming atmosphere, it is also possible to form a titanium oxide layer on the surface. For example, in the case where the titanium material is immersed in a hydrochloric acid aqueous solution, when the pH of the solution is less than 0.5, titanium is dissolved therein. However, at a pH of 0.5 or more, a passivation film is formed. Such a state is referred to as a "passive state forming atmosphere". By controlling the temperature and the time of the oxidation treatment in a passive state forming atmosphere, it is possible to control the thickness of the passivation film, i.e., the titanium oxide film. Namely, it is essential only that the oxidation conditions are appropriately adjusted so as to implement the thickness of the titanium oxide layer at 10 nm or more and 80 nm or less.

For example, in the case of using a hydrochloric acid aqueous solution with a pH of 2, when the treatment is carried out at 50 °C for 240 hours, a titanium oxide layer with a thickness of about 25 nm is formed; when the treatment is carried out at 100 °C for 240 hours, a titanium oxide layer with a thickness of about 40 nm is formed; and when the treatment is carried out at 150 °C for 240 hours, a titanium oxide layer with a thickness of about 70 nm is formed. Then, when the treatment is carried out at 200 °C for 240 hours, a titanium oxide layer with a thickness of about 100 nm is formed. Thus, the thickness of the titanium oxide layer increases.

The titanium oxide layers formed by respective methods described above are different in crystallinity of titanium oxide from one another according to the method. The titanium oxide layer formed by a heat treatment in an air atmosphere includes crystalline titanium oxide. Whereas, the titanium oxide layer formed by an anodic oxidation treatment and an oxidation treatment in a passive state forming atmosphere includes amorphous titanium oxide. Thus, the following has been confirmed. The crystalline titanium oxide is superior in corrosion resistance and hydrogen absorption resistance. However, in the atmosphere in the fuel cell, even amorphous titanium oxide exhibits sufficient performances. Therefore, the titanium oxide layer formation step S1 may be carried out with any of the foregoing methods. Further, these methods are non-limiting, and the titanium oxide formation step S1 can also be carried out with other methods capable of forming a titanium oxide layer on the surface of the titanium material.

Preferably, prior to carrying out the titanium oxide layer formation step S1, a pickling treatment step S11 of subjecting the titanium material to a pickling treatment is carried out. For example, when the sheet thickness of the titanium material is set as small as 0.3 mm or less, a heat treatment and rolling are carried out until the titanium material is processed into such a sheet thickness. Therefore, the conditions of contamination on the titanium material surface and the conditions of the natural oxide layer thereon often vary diversely. Also in order to form a uniform titanium oxide layer on the titanium material surface, preferably, after immersing the titanium material in an acid solution, and thereby removing the contamination or the natural oxide layer on the surface, a titanium oxide layer is formed again in the titanium oxide layer formation step S1 as described above. As the acid solutions for use in the pickling treatment step S11, for example, preferred are aqueous solutions prepared by appropriately diluting non-oxidizing acids such as hydrofluoric acid, hydrochloric acid, and sulfuric acid, alone or mixtures of two or more thereof, and a mixture thereof further including one or more of nitric acid and hydrogen peroxide. For example, a mixed aqueous solution of 1 mass% hydrofluoric acid and 5 mass% nitric acid can be used. Further, the pickling treatment may be carried out in a single step or in two or more divided steps.

### [Noble metal layer formation step]

The noble metal layer formation step S2 is a step of forming a noble metal layer with a thickness of 2 nm or more, including at least one noble metal selected from Au, Pt, and Pd on the titanium oxide layer formed by the titanium oxide layer formation step S1 with a PVD method.

It is known that, Au, Pt, and Pd are excellent in corrosion resistance even though each will not form a passivation film on the surface, and are excellent in electrical conductivity because they are transition metals. Therefore, by forming a noble metal layer including a noble metal appropriately selected from these, it becomes possible to impart excellent corrosion resistance and electrical conductivity to the titanium material for electrodes.

The thickness of the noble metal layer is required to be set at 2 nm or more. When the thickness of the noble metal layer is less than 2 nm, the number of pinholes is too large. For this reason, during the heat treatment step S3 described later, oxidation of pure titanium or the titanium alloy of the titanium material spreads from the pinholes to the underside of the noble metal layer. Accordingly, the contact resistance is not lowered. The preferred thickness of the noble metal layer is 3 nm or more, and the further preferred thickness of the noble metal layer is 5 nm or more. On the other hand, the upper limit of the thickness of the noble metal layer has no particular restriction. However, the smaller thickness is more preferred from the viewpoint of the cost because of the necessity of a noble metal. For example, the thickness is preferably set at 500 nm or less.

As the method for forming a noble metal layer including at least one noble metal selected from Au, Pt, and Pd, a PVD method such as a sputtering method, a vacuum deposition method, or an ion plating method is used. The PVD method can form a noble metal layer on the surface of the titanium oxide layer formed on the titanium material at ordinary temperatures. For this reason, the PVD method not only can reduce damages given on the titanium material, but also can form a noble metal layer over a relatively large area, resulting in an improvement of the productivity.

### [Heat treatment step]

The heat treatment step S3 is a step of heat treating the titanium material having the titanium oxide layer and the noble metal layer formed thereon in the foregoing manner at a temperature of 300 °C or more and 800 °C or less.

Pinholes are present in the noble metal layer. The base material exposed at the pinholes is in contact with the environment. Therefore, oxygen is supplied thereto, and oxides are formed. In the present invention, at the pinhole parts, the titanium oxide layer formed by the titanium oxide layer formation step S1 is exposed. In general, titanium oxide formed by a heat treatment in an air atmosphere, an anodic oxidation treatment, an oxidation treatment in a passive state forming atmosphere, or the like is higher in corrosion resistance to the natural oxide layer. Therefore, high corrosion resistance can also be provided even at the titanium oxide exposed at the pinholes. Further, when the material is heat treated in an air atmosphere as the titanium oxide layer formation step S1, and further, the heat treatment temperature of the heat treatment step S3 is higher than the heat treatment temperature, oxidation of titanium further proceeds. As a result, it is possible to form a titanium oxide layer having higher hydrogen absorption resistance and corrosion resistance.

Further, by the heat treatment in the heat treatment step S3, respective elements mutually diffuse in the noble metal layer and the titanium oxide layer. Accordingly, the adhesion between these two layers increases, and the electrical conductivity increases. Further, the titanium oxide layer is heat treated with supply of oxygen being cut off by the noble metal layer on the surface. Therefore, oxygen in the titanium oxide layer diffuses toward the titanium material, so that a part or the whole thereof changes into titanium oxide in an oxygen deficient state (titanium oxide having an oxygen deficient gradient structure). It is considered as follows: the titanium oxide in the oxygen deficient state is in the same state as with an n type semiconductor which increases in the electrical conductivity when oxygen is short of the stoichiometric ratio, and hence it can be improved in electrical conductivity.

In order to obtain such an effect, it is necessary that the heat treatment temperature in the heat treatment step S3 is set at 300 °C or more and 800 °C or less. When such a heat treatment temperature is less than 300 °C, the elements of the noble metal layer and the titanium oxide layer are less likely to mutually diffuse. Thus, the improvement of the adhesion and the improvement of the electrical conductivity are not sufficiently carried out. On the other hand, when such a heat treatment temperature exceeds 800 °C, the diffusion rate of the elements of the noble metal layer and the titanium oxide layer is too high. Therefore, the noble metal and titanium or a titanium alloy mutually diffuse too much. For this reason, titanium diffuses even to the surface of the noble metal layer, and combines with oxygen of the atmosphere, resulting in the formation of the naturally oxidized titanium oxide layer. Accordingly, the contact resistance rather increases, and the electrical conductivity is degraded. Preferred heat treatment temperature is 330 °C or more and 750 °C or less. Further preferred heat treatment temperature is 350 °C or more and 700 °C or less. Incidentally, when the heat treatment is carried out for a long time even within such a temperature range, titanium diffuses even to the surface of the noble metal layer, and as described above, forms a naturally oxidized titanium oxide layer. For this reason, the heat treatment time is required to be appropriately controlled with respect to the heat treatment temperature.

Out of the noble metals in the noble metal layer, Au or Pt does not form an oxide film even when subjected to a heat treatment in an air atmosphere including oxygen present therein. Therefore, Au or Pt can provide a low contact resistance. Therefore, when Au or Pt is used for the noble metal layer, the heat treatment can be carried out in an air atmosphere. Thus, control of the atmosphere is not required as with the atmosphere heat treatment using an inert gas or a reducing gas, or a vacuum heat treatment. Therefore, the layer can be treated in a large quantity for a short time, which also results in advantages of a high productivity and a low treatment cost.

On the other hand, when Pd is used for the noble metal layer, the heat treatment is preferably carried out in an atmosphere at 1 Pa or less. Such an atmosphere can make Pd resistant to oxidation even with the heat treatment, and, as described above, can allow the titanium oxide layer to include titanium oxide in an oxygen deficient state. Accordingly, excellent electrical conductivity can be obtained.

In the heat treatment step S3, any heat treatment furnace such as an electric furnace or a gas furnace can be used so long as the furnace is a heat treatment furnace capable of carrying out a heat treatment at a heat treatment temperature of at least 300 °C or more and 800 °C or less, and preferably capable of atmosphere control.

Below, Examples whereby the advantages of the present invention have been confirmed will be described by comparison with Comparative Examples not satisfying the requirements of the present invention.

### [First Example]

In First Example, the surface treatment method by a heat treatment in an air atmosphere as the titanium oxide layer formation step S1 was evaluated.

### (Surface treatment of test plate)

The test plate used was treated in the following manner. First, a titanium material (2 cm in width × 5 cm in length × 0.2 mm in thickness) formed of class 1 pure titanium specified according to JIS H 4600 was, as the pickling treatment step S11, subjected to ultrasonic cleaning in acetone. Then, the titanium material was subjected to a pickling treatment in a mixed aqueous solution of 1 mass% hydrofluoric acid and 5 mass% nitric acid, and cleaned with pure water, and dried. Then, as the titanium oxide layer formation step S1, a heat treatment in an air atmosphere was carried out under the heat treatment conditions (temperature and time) shown in Table 1. The thickness of the titanium oxide layer formed on the heat treated test plate surface was measured by observation under a transmission electron microscope (TEM). The results are shown together in Table 1.

For TEM observation, each test plate was cut out, and the cut surface was processed by means of a focused ion beam processing apparatus (FB-2000A manufactured by Hitachi, Ltd.) to be reduced in thickness to 100 nm or less, resulting in a test piece. The test piece for observation was observed under the condition of an acceleration voltage of 200 kV by means of a TEM (HF-2000 field emission type transmission electron microscope manufactured by Hitachi, Ltd.), thereby to measure the thickness of the titanium oxide layer.

Then, as the noble metal layer formation step S2, on the titanium material after formation of the titanium oxide layer, a noble metal layer was formed by a sputtering method. The titanium material was set on a substrate stage in a chamber of a magnetron sputtering apparatus, and a target of a noble metal of the type shown in Table 1 was attached on the electrode in the chamber. Then, the inside of the chamber was evacuated to vacuum of 0.00133 Pa (1 × 10⁻⁵ Torr) or less. Then, an argon gas was introduced into the chamber, and the pressure was controlled so as to be 0.266 Pa (2 × 10⁻³ Torr). Then, the electrode with the noble metal target attached thereon was applied with RF (high frequency). As a result, an argon gas was excited to generate an argon plasma. Thus, sputtering of the noble metal was carried out, thereby to form a noble metal layer with the thickness shown in Table 1 on the surface of each titanium material. Further, the titanium material was turned upside down. Thus, in the same manner, the same noble metal layer was also formed on the back side of the titanium material. As the target of a noble metal, Au, Pt, or Pd was used. However, formation thereof was carried out under the same noble metal formation conditions in all cases.

Finally, as the heat treatment step S3, the titanium materials each with noble metal layers formed on the opposite sides were heat treated in the atmosphere (air, or 0.0067 Pa vacuum), at the temperatures, and for the times shown in Table 1, resulting in test plates 1 to 12.

Further, as Comparative Examples, test plates 13 and 14 each obtained by forming only a noble metal layer on a titanium material were manufactured. First, as with the test plates 1 to 12, a titanium material (2 cm in width × 5 cm in length × 0.2 mm in thickness) formed of class 1 pure titanium specified according to JIS H 4600 was subjected to ultrasonic cleaning in acetone. The titanium material was set on a substrate stage in the chamber of a magnetron sputtering apparatus, and the inside of the chamber was evacuated to 0.00133 Pa (1 × 10⁻⁵ Torr). Then, an argon gas was supplied to the ion gun set in the chamber, and the pressure in the chamber was controlled to 0.0267 Pa (2 × 10⁻⁴ Torr). Then, an argon ion beam was generated under the conditions of a filament current of 4.0 A, a discharge voltage of 60 V, a beam voltage of 500 V, and an acceleration voltage of 500 V. Thus, the argon ion beam was applied at an angle of 45° with respect to the titanium material surface for 5 minutes. As a result, the natural oxide layer on the titanium material surface was removed.

Then, the sputtering method was carried out under the same conditions as those for the test plates 1 and 3 with the titanium material set in the chamber. As a result, a noble metal layer of Au or Pt was formed with a thickness of 10 nm on the titanium material. Further, the titanium material was turned upside down. Thus, removal of the natural oxide layer and formation of the noble metal layer were carried out in the same manner, resulting in test plates 13 and 14.

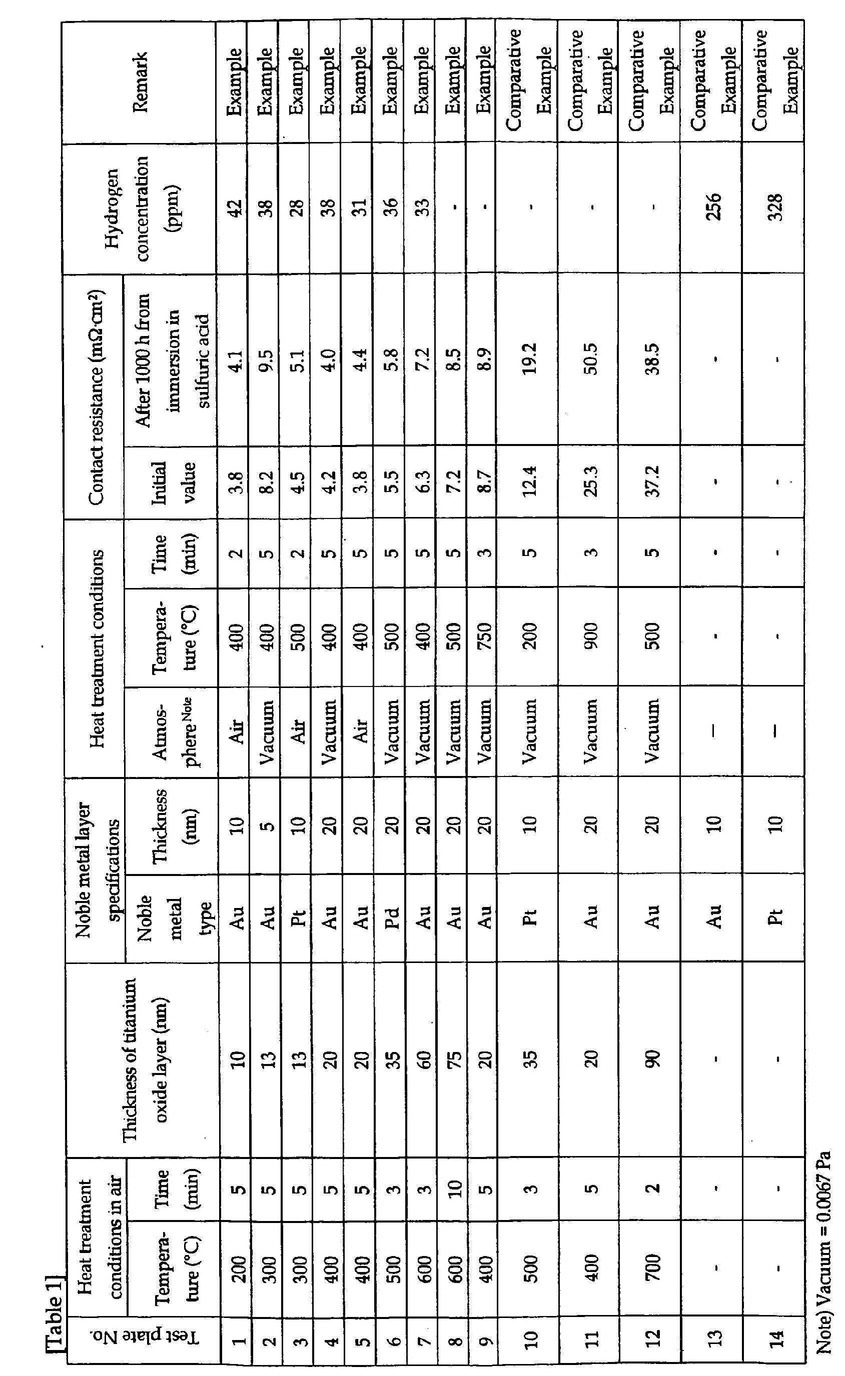

### (Evaluation of electrical conductivity and corrosion resistance)

The test for confirming the electrical conductivity and the corrosion resistance were carried out in the following manner. The test plates 1 to 12 were each measured for the contact resistance values by measuring the initial value and the value after 1000-hour immersion in a 80 °C sulfuric acid aqueous solution (pH2), respectively, and comparing them. The initial values and the contact resistance values after 1000-hour immersion in a sulfuric acid aqueous solution are shown in Table 1.

The contact resistance value of each test plate was measured by means of a contact resistance measuring apparatus 10 shown in FIG. 2. Incidentally, FIG. 2 is an illustrative view for illustrating the measuring method of the contact resistance.

As shown in FIG. 2, the opposite sides of the test plate were sandwiched between carbon cloths C, and the outsides thereof were further applied with a load of 98 N (10 kgf) by copper electrodes 11 each having a contact area of 1 cm², respectively. Thus, a current of 7.4 mA was passed therethrough by means of a DC current source 12. Thus, the voltage applied across the carbon cloths C was measured by means of a voltmeter 13, thereby to calculate the contact resistance value.

It has been assumed that the acceptability criterion for the electrical conductivity and the corrosion resistance is the one having a contact resistance value after 1000-hour immersion in a sulfuric acid aqueous solution of 10 mΩ·cm² or less.

As shown in Table 1, for each of the test plates 1 to 9, the conditions for the surface treatment fall within the range of the present invention. Therefore, the initial value of the contact resistance is low, and the contact resistance value after 1000-hour immersion in a sulfuric acid aqueous solution is 10 mΩ·cm² or less. This indicates that the test plates 1 to 9 are the titanium materials for electrodes having excellent electrical conductivity and corrosion resistance (Examples).

On the other hand, for all of the test plates 10 to 12, the initial value and the value after immersion in a sulfuric acid aqueous solution of the contact resistance are high (Comparative Examples). This is considered to be due to the following. As for the test plate 10, the treatment temperature in the heat treatment step S3 is lower than the temperature range of the present invention. For this reason, the electrical conductivity of the titanium oxide layer does not increase sufficiently. As for the test plate 11, the treatment temperature in the heat treatment step S3 is higher than the temperature range of the present invention. For this reason, in the metal layer and the titanium material, the elements mutually diffuse too much. As a result, titanium diffuses to the outermost surface of the test plate to form a naturally oxidized titanium oxide layer, resulting in a reduction of the electrical conductivity. Whereas, for the test plate 12, the treatment temperature in the titanium oxide layer formation step S1 (heat treatment in an air atmosphere) is higher than the temperature range of the present invention. For this reason, the titanium oxide layer is formed with a thickness larger than the range of the present invention, resulting in a reduction of the electrical conductivity.

### (Evaluation of hydrogen absorption resistance)

The test for confirming the hydrogen absorption resistance was carried out by measuring the hydrogen concentration of each test plate for the test plates 1 to 7, 13, and 14. Each test plate was put in the vapor phase part of a closed container including water and 0.3 MPa (3 atm) hydrogen. This was heated at 150 °C. As a result, the test plate was exposed in a pure hydrogen (purity 99.9 %) atmosphere humidified to a humidity of about 100 % for 500 hours. Then, in an inert gas (Ar) flow, the test plate put in a graphite crucible was heat fused by a graphite resistance heating system together with tin (manufactured by KOJUNDO Chemical Laboratory Co., Ltd.). As a result, hydrogen was extracted with other gases. Then, the extracted gases were passed through a separation column, so that hydrogen was separated from other gases. The separated hydrogen was transported to a thermal conductivity detector, and the change in the thermal conductivity by hydrogen was measured (inert gas fusion - gas chromatography method), thereby to measure the hydrogen concentrations of the test plates 1 to 7, 13, and 14.

The hydrogen concentrations of the test plates 1 to 7, 13, and 14 are shown in Table 1. The acceptability criterion for the hydrogen absorption resistance was set as the one having a hydrogen concentration of 70 ppm or less. Incidentally, the concentration of hydrogen contained in a general titanium material is about 25 to 35 ppm.

As shown in Table 1, the test plates 1 to 7 are low in hydrogen concentration, indicating that the test plates 1 to 7 scarcely absorb hydrogen (Examples).

On the other hand, the test plates 13 and 14, in each of which no titanium oxide layer is present between the noble metal layer and the titanium material, are high in hydrogen concentration, indicating that the test plates 13 and 14 apparently absorb hydrogen (Comparative Examples). Therefore, there is a fear that the test plates 13 and 14 each may be embrittled by long-term hydrogen absorption as the titanium material for electrodes.

### [Second Example]

In Second Example, evaluation of the surface treatment method by an anodic oxidation treatment as the titanium oxide layer formation layer S1 was carried out.

### (Surface treatment of test plate)

Each used test plate was treated in the following manner. First, a titanium material (2 cm in width × 5 cm in length × 1 mm in thickness) formed of class 1 pure titanium specified according to JIS H 4600 was, as the pickling treatment step S11, subjected to ultrasonic cleaning in acetone. Then, the titanium material was subjected to a first pickling treatment in a 4 mass% hydrofluoric acid aqueous solution. Then, the titanium material was subjected to a second pickling treatment in a mixed aqueous solution of 0.5 mass% hydrofluoric acid and 5 mass% hydrogen peroxide, and then cleaned with pure water, and dried. Then, as the titanium oxide layer formation step S1, an anodic oxidation treatment was carried out at the voltage and for the holding time shown in Table 2 in a room-temperature 1 mass% phosphoric acid aqueous solution. The thickness of the titanium oxide layer formed on the test plate surface subjected to the anodic oxidation treatment was measured by TEM observation in the same manner as in First Example. The results are shown together in Table 2.

Then, each titanium material after formation of the titanium oxide layer was subjected to the noble metal layer formation step S2 and the heat treatment step S3 under the conditions shown in Table 2, respectively, in the same manner as in Example 1. As a result, test plates 15 to 19 were obtained.

### (Evaluation)

As for each of the test plates 15 to 19, the initial value and the contact resistance value after 1000-hour immersion in a sulfuric acid aqueous solution were measured, respectively, in the same manner as in Example 1 as evaluation of the electrical conductivity and the corrosion resistance. Further, for each of the test plates 15 to 19, the hydrogen concentration of the test plate after 500-hour hydrogen exposure at 150 °C was measured in the same manner as in Example 1 as evaluation of the hydrogen absorption resistance. The contact resistance values and the hydrogen concentrations of the test plates 15 to 19 are shown in Table 2.

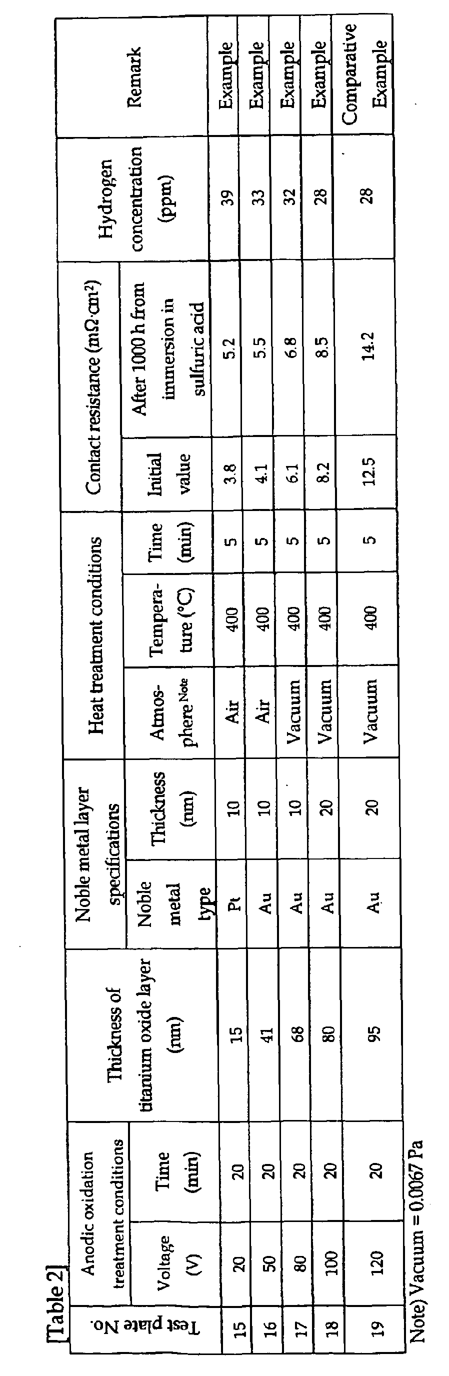

As shown in Table 2, for each of the test plates 15 to 18, the conditions for the anodic oxidation treatment fall within the range of the present invention. Therefore, the initial value of the contact resistance is low, and the contact resistance value after 1000-hour immersion in a sulfuric acid aqueous solution is 10 mΩ·cm² or less. This indicates that the test plates 15 to 18 are the titanium materials for electrodes having excellent electrical conductivity and corrosion resistance (Examples).

On the other hand, for the test plate 19, the voltage in the anodic oxidation treatment is higher than the temperature range of the present invention. For this reason, the titanium oxide layer is formed with a thickness larger than the range of the present invention. As a result, the electrical conductivity is reduced, and the contact resistance is more than 10 mΩ·cm² in initial value (Comparative Example).

Further, as shown in Table 2, for all of the test plates 15 to 18, the hydrogen concentration is the value as low as less than 40 ppm. This indicates that each test plate scarcely absorbs hydrogen even by the titanium oxide layer formed by the anodic oxidation treatment, and becomes a titanium material for electrodes excellent in hydrogen absorption resistance.

### [Third Example]

In Third Example, evaluation of the surface treatment method by a oxidation treatment in a passive state forming atmosphere as the titanium oxide layer formation step S1 was carried out.

### (Surface treatment of test plate)

The test plate used was treated in the following manner. First, a titanium material (2 cm in width × 5 cm in length × 1 mm in thickness) formed of class 1 pure titanium specified according to JIS H 4600 was, as the pickling treatment step S11, subjected to ultrasonic cleaning in acetone. Then, the titanium material was subj ected to a pickling treatment in a mixed aqueous solution of 1 mass% hydrofluoric acid and 5 mass% nitric acid, and cleaned with pure water, and dried. Then, as the titanium oxide layer formation step S1, an oxidation treatment was carried out in a passive state forming atmosphere. In a container made of titanium and with a volume of 0.3 L, and applied with Teflon (registered trademark) lining, the titanium material and a 0.2 L hydrochloric acid aqueous solution (pH2) were put, and the container was closed. Then, the container was immersed in pure water put in an autoclave made of titanium. Thus, the autoclave was closed, and held at the temperature and holding time shown in Table 3. Then, the autoclave and the container made of titanium were opened. Then, the titanium material was taken out therefrom, washed with pure water, and dried, resulting in a titanium material subjected to the oxidation treatment. The thickness of the titanium oxide layer formed on the test plate surface subjected to the oxidation treatment was measured by TEM observation in the same manner as in First Example. The results are shown together in Table 3.

Then, each titanium material after formation of the titanium oxide layer was subjected to the noble metal layer formation step S2 and the heat treatment step S3 under the conditions shown in Table 3, respectively, in the same manner as in Example 1. As a result, test plates 20 to 23 were obtained.

### (Evaluation)

As for each of the test plates 20 to 23, the initial value and the contact resistance value after 1000-hour immersion in a sulfuric acid aqueous solution were measured, respectively, in the same manner as in Example 1 as evaluation of the electrical conductivity and the corrosion resistance. Further, for each of the test plates 20 to 23, the hydrogen concentration of the test plate after 500-hour hydrogen exposure at 150 °C was measured in the same manner as in Example 1 as evaluation of the hydrogen absorption resistance. The contact resistance values and the hydrogen concentrations of the test plates 20 to 23 are shown in Table 3.

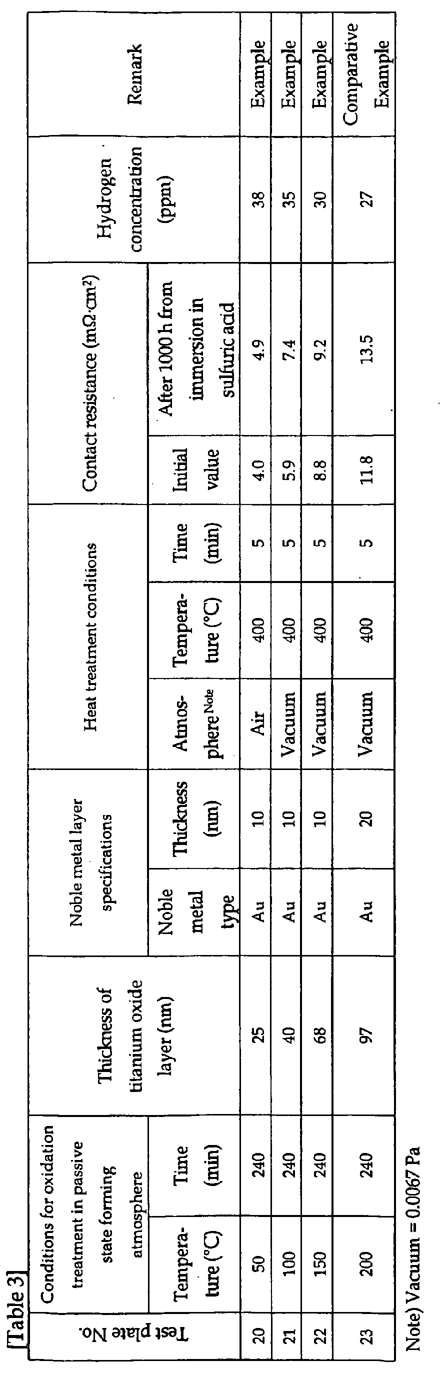

As shown in Table 3, for each of the test plates 20 to 22, the initial value of the contact resistance is low, and the contact resistance value after 1000-hour immersion in a sulfuric acid aqueous solution is 10 mΩ·m² or less. This indicates that the test plates 20 to 22 are the titanium materials for electrodes having excellent electrical conductivity and corrosion resistance (Examples).

On the other hand, for the test plate 23, with the oxidation treatment in a passive state forming atmosphere, the titanium oxide layer is formed with a thickness larger than the range of the present invention. As a result, the electrical conductivity is reduced, and the contact resistance is more than 10 mΩ·cm² in initial value (Comparative Example).

Further, as shown in Table 3, for all of the test plates 20 to 22, the hydrogen concentration is the value as low as less than 40 ppm. This indicates that each test plate scarcely absorbs hydrogen even by the titanium oxide layer formed by the oxidation treatment in the passive state forming atmosphere, and becomes a titanium material for electrodes excellent in hydrogen absorption resistance.

Up to this point, the surface treatment method of the titanium material for electrodes in accordance with the present invention was described specifically by way of the best mode for carrying out the invention and Examples.

## Claims

1. A surface treatment method of a titanium material for electrodes, comprising:
a titanium oxide layer formation step of forming a titanium oxide layer with a thickness of 10 nm or more and 80 nm or less on the surface of the titanium material including pure titanium or a titanium alloy;
a noble metal layer formation step of forming a noble metal layer with a thickness of 2 nm or more including at least one noble metal selected from Au, Pt, and Pd on the titanium oxide layer by a PVD method; and
a heat treatment step of heat treating the titanium material having the noble metal layer formed thereon at a temperature of 300 °C or more and 800 °C or less.

2. The surface treatment method of a titanium material for electrodes according to claim 1, wherein the titanium oxide layer formation step includes heat treating the titanium material at a temperature of 200 °C or more and 600 °C or less in an air.

3. The surface treatment method of a titanium material for electrodes according to claim 1, wherein the titanium oxide layer formation step includes subjecting the titanium material to an anodic oxidation treatment at a voltage of 100 V or less.

4. The surface treatment method of a titanium material for electrodes according to claim 1, wherein the titanium oxide layer formation step includes subjecting the titanium material to an oxidation treatment in a passive state forming atmosphere of titanium.

5. The surface treatment method of a titanium material for electrodes according to claim 1, wherein prior to performing the titanium oxide layer formation step, a pickling treatment step of removing the natural oxide layer on the surface of the titanium material by a solution containing a non-oxidizing acid is performed.

6. The surface treatment method of a titanium material for electrodes according to claim 2, wherein prior to performing the titanium oxide layer formation step, a pickling treatment step of removing the natural oxide layer on the surface of the titanium material by a solution containing a non-oxidizing acid is performed.

7. The surface treatment method of a titanium material for electrodes according to claim 3, wherein prior to performing the titanium oxide layer formation step, a pickling treatment step of removing the natural oxide layer on the surface of the titanium material by a solution containing a non-oxidizing acid is performed.

8. The surface treatment method of a titanium material for electrodes according to claim 4, wherein prior to performing the titanium oxide layer formation step, a pickling treatment step of removing the natural oxide layer on the surface of the titanium material by a solution containing a non-oxidizing acid is performed.

## Patentansprüche

1. Verfahren zum Oberflächenbehandeln eines Titanmaterials für Elektroden, umfassend:
einen Titanoxidschicht-Bildungsschritt des Bildens einer Titanoxidschicht mit einer Dicke von 10 nm oder mehr und 80 nm oder weniger auf der Oberfläche des Titanmaterials, das reines Titan oder eine Titanlegierung umfasst,
einen Edelmetallschicht-Bildungsschritt des Bildens einer Edelmetallschicht mit einer Dicke von 2 nm oder mehr, die mindestens ein Edelmetall umfasst, das aus Au, Pt und Pd ausgewählt ist, auf der Titanoxidschicht mittels eines PVD-Verfahrens, und
einen Wärmebehandlungsschritt des Wärmebehandelns des Titanmaterials, das die darauf ausgebildete Edelmetallschicht aufweist, bei einer Temperatur von 300 °C oder mehr und 800 °C oder weniger.

2. Verfahren zum Oberflächenbehandeln eines Titanmaterials für Elektroden nach Anspruch 1, bei dem der Titanoxidschicht-Bildungsschritt das Wärmebehandeln des Titanmaterials bei einer Temperatur von 200 °C oder mehr und 600 °C oder weniger in Luft umfasst.

3. Verfahren zum Oberflächenbehandeln eines Titanmaterials für Elektroden nach Anspruch 1, bei dem der Titanoxidschicht-Bildungsschritt das Unterziehen des Titanmaterials einer anodischen Oxidationsbehandlung bei einer Spannung von 100 V oder weniger umfasst.

4. Verfahren zum Oberflächenbehandeln eines Titanmaterials für Elektroden nach Anspruch 1, bei dem der Titanoxidschicht-Bildungsschritt das Unterziehen des Titanmaterials einer Oxidationsbehandlung in einer Umgebung umfasst, die einen passiven Zustand von Titan bildet.

5. Verfahren zum Oberflächenbehandeln eines Titanmaterials für Elektroden nach Anspruch 1, bei dem vor der Durchführung des Titanoxidschicht-Bildungsschritts ein Beizbehandlungsschritt des Entfernens der natürlichen Oxidschicht auf der Oberfläche des Titanmaterials durch eine Lösung, die eine nichtoxidierende Säure enthält, durchgeführt wird.

6. Verfahren zum Oberflächenbehandeln eines Titanmaterials für Elektroden nach Anspruch 2, bei dem vor der Durchführung des Titanoxidschicht-Bildungsschritts ein Beizbehandlungsschritt des Entfernens der natürlichen Oxidschicht auf der Oberfläche des Titanmaterials durch eine Lösung, die eine nichtoxidierende Säure enthält, durchgeführt wird.

7. Verfahren zum Oberflächenbehandeln eines Titanmaterials für Elektroden nach Anspruch 3, bei dem vor der Durchführung des Titanoxidschicht-Bildungsschritts ein Beizbehandlungsschritt des Entfernens der natürlichen Oxidschicht auf der Oberfläche des Titanmaterials durch eine Lösung, die eine nichtoxidierende Säure enthält, durchgeführt wird.

8. Verfahren zum Oberflächenbehandeln eines Titanmaterials für Elektroden nach Anspruch 4, bei dem vor der Durchführung des Titanoxidschicht-Bildungsschritts ein Beizbehandlungsschritt des Entfernens der natürlichen Oxidschicht auf der Oberfläche des Titanmaterials durch eine Lösung, die eine nichtoxidierende Säure enthält, durchgeführt wird.

## Revendications

1. Procédé de traitement de surface d'un matériau en titane pour des électrodes, comprenant :
une étape de formation d'une couche d'oxyde de titane qui consiste à former une couche d'oxyde de titane avec une épaisseur de 10 nm ou plus et de 80 nm ou moins sur la surface du matériau en titane comportant du titane pure ou un alliage de titane ;
une étape de formation d'une couche de métal noble qui consiste à former une couche d'un métal noble avec une épaisseur de 2nm ou plus comportant au moins un métal noble sélectionné parmi Au, Pt, et Pd sur la couche d'oxyde de titane par un procédé de dépôt physique en phase vapeur, PVD ; et
une étape de traitement thermique qui consister à traiter à la chaleur le matériau en titane ayant la couche de métal noble formée sur celui-ci à une température de 300°C ou plus et de 800°C ou moins.

2. Procédé de traitement de surface d'un matériau de titane pour des électrodes selon la revendication 1, dans lequel l'étape de formation de la couche d'oxyde de titane comporte le fait de traiter à la chaleur le matériau en titane à une température de 200°C ou plus et de 600°C ou moins dans de l'air.

3. Procédé de traitement de surface d'un matériau de titane pour des électrodes selon la revendication 1, dans lequel l'étape de formation de la couche d'oxyde de titane comporte le fait de soumettre le matériau en titane à un traitement d'oxydation anodique à une tension de 100 V ou moins.

4. Procédé de traitement de surface d'un matériau de titane pour des électrodes selon la revendication 1, dans lequel l'étape de formation de la couche d'oxyde de titane comporte le fait de soumettre le matériau en titane à un traitement d'oxydation dans une atmosphère de formation d'état passif de titane.

5. Procédé de traitement de surface d'un matériau de titane pour des électrodes selon la revendication 1, dans lequel avant d'exécuter l'étape de formation de la couche d'oxyde de titane, une étape de traitement de décapage qui consiste à enlever la couche d'oxyde de métal sur la surface du matériau en titane par une solution contenant un acide non-oxydant est exécutée.

6. Procédé de traitement de surface d'un matériau de titane pour des électrodes selon la revendication 2, dans lequel avant d'exécuter l'étape de formation de la couche d'oxyde de titane, une étape de traitement de décapage qui consiste à enlever la couche d'oxyde de métal sur la surface du matériau en titane par une solution contenant un acide non-oxydant est exécutée.

7. Procédé de traitement de surface d'un matériau de titane pour des électrodes selon la revendication 3, dans lequel avant d'exécuter l'étape de formation de la couche d'oxyde de titane, une étape de traitement de décapage qui consiste à enlever la couche d'oxyde naturel sur la surface du matériau en titane par une solution contenant un acide non-oxydant est exécutée.

8. Procédé de traitement de surface d'un matériau de titane pour des électrodes selon la revendication 4, dans lequel avant d'exécuter l'étape de formation de la couche d'oxyde de titane, une étape de traitement de décapage qui consiste à enlever la couche d'oxyde naturel sur la surface du matériau en titane par une solution contenant un acide non-oxydant est exécutée.
